# EUROPEAN PATENT SPECIFICATION

(11) **EP 1 066 493 B1**
(45) Date of publication and mention of the grant of the patent: **14.05.2003**
(21) Application number: 99917272.9
(22) Date of filing: 02.03.1999
(51) Int. Cl.: F28D 9/00, F24D 10/00

(54) **HEAT EXCHANGER INSTALLATION**
WÄRMETAUSCHERVORRICHTUNG
ENSEMBLE ECHANGEUR THERMIQUE

(30) Priority: 02.04.1998 SE 9801192
(43) Date of publication of application: 10.01.2001
(73) Proprietor: Alfa Laval AB, 147 80 Tumba (SE)
(72) Inventor: ENGSTRÖM, Anders, S-371 40 Karlskrona (SE); PERSSON, Mats, S-372 39 Ronneby (SE)
(74) Representative: Lerwill, John
(86) International application number: SE9900300
(87) International publication number: WO99051926

(56) References cited:
- EP-A2- 0 222 040
- DE-A- 1 601 941
- DE-A- 1 933 074
- DE-A- 2 210 808
- DE-C- 815 647
- DE-C- 883 611
- DE-C- 916 294
- DE-C- 954 256
- DE-C- 959 916
- DE-C- 972 558
- GB-A- 681 561
- SE-C- 114 791
- SE-C- 163 438
- US-A- 2 185 001
- US-A- 5 492 171
- US-A- 5 727 623

## Description

The present invention concerns a heat exchanger plant comprising a first brazed plate heat exchanger adapted for heat exchange between district heating water and radiator water and a second brazed plate heat exchanger adapted for heat exchange between district heating water and tap warm-water. Each of which plate heat exchangers has a plate package, which comprises two end plates and several intermediate plates therebetween and through which there extend several port channels formed by aligned port holes in the said plates. The plate heat exchangers are arranged such that two end plates are at a distance from and opposite to each other and at least one channel forming member is arranged between these end plates for conducting one of the district heating water, the radiator water and the tap warm-water through a connection channel to or from one or more of the said port channels. Such a heat exchanger plant is known for instance from DE-C-959916.

By a brazed plate heat exchanger is meant in this connection a plate heat exchanger wherein the different plates are permanently joined with each other through brazing.

The intermediate plates in a plate package are constituted by so-called heat transfer plates, between which passages for at least two heat exchange fluids are formed. Certain such passages are adapted to be flowed through by a first heat exchange fluid and are connected with two port channels, one intended to conduct the heat exchange fluid to the passages and the other intended to conduct the heat exchange fluid from the passages. Other passages are adapted to be flowed through by a second heat exchange fluid and are connected with two other port channels.

The end plates in a plate package may either be of the same kind and have the same shape as the heat transfer plates or have a different thickness and/or shape. At least one of the end plates in each plate package is provided with port holes, which form part of respective port channels.

In a heat exchange plant several plate heat exchangers may be connected. For instance, one heat exchange fluid may flow through two different plate heat exchangers and exchange heat therein with two different heat exchange fluids, which flow through respective ones of the plate heat exchangers.

The heat exchanger plant initially described is intended to form part of a so-called sub station in a district heating system. One such sub station is usually built on a frame with the plate heat exchangers arranged, as mentioned initially, at a distance from each other and with channel forming members in the form of pipes arranged between the plate heat exchangers for conducting of at least one of the district heating water, the radiator water and the tap warm-water. Further, a sub station of this kind usually comprises a pump, valves, sensors and additional pipes between different parts of the sub station. Since the plate heat exchangers are arranged at a distance from each other with pipes arranged there-between, the sub station becomes relatively large. Further, many working hours are required for coupling the different parts of the sub station together by means of pipes.

In DE-C-959916 there is described a plate heat exchanger assembly in which two heat exchangers are spaced apart by a frame member through which pipe connectors pass for conducting the heat exchange fluids to and from the two heat exchangers. US-A-5727623 discloses a dehumidifier assembly having an air-water separator disposed between two plate heat exchangers, each heat exchanger having a stack of heat exchange plates which are brazed together and held between an end plate and an end wall of the air-water separator, and the end plates having first holes interconnected by a conduit which extends through the air-water separator for conducting air between the heat exchangers, and second holes which communicate with the interior of the air-water separator. There is described in EP-A-0222040 a compact heat exchanger plant for heating system water and domestic water, the plant having two plate heat exchangers interconnected by an intermediate part including control and regulating device for regulating the temperature of the heating and domestic water.

The object of the present invention is to provide a heat exchanger plant of the kind initially mentioned, by means of which it is possible to build a sub station, which is more compact than earlier known sub stations but which still has the same functions as such a sub station. An other object of the invention is to reduce the necessary piping in a sub station and thereby reduce the working hours for coupling together the parts of the sub station.

These objects can be obtained by means of a heat exchanger plant according to the invention, which is characterised in that that the plate heat exchangers form a single brazed unit together with a spacing member which is positioned between and extends along the edges of the end plates located opposite to each other and which encloses a space between the plate heat exchangers, that a plurality of connecting spaces are enclosed by the spacing member between the plate heat exchangers and are in communication with port channels of the heat exchangers, the connecting spaces being closed at the opposed end plates by the brazed connection of the spacing member to said end plates; and that said channel forming member has a form such that a connection channel formed therein extends from one of the connecting spaces through the spacing member to the outside thereof, such that the connection channel is accessible outside said space between the plate heat exchangers for supply or removal of one of said district heating water, radiator water and tap warm-water.

As earlier mentioned, by the invention the piping in a sub station can be considerably reduced, and accordingly also the working hours for manufacturing a sub station can be reduced. Furthermore, a sub station can be made considerably more compact than before.

The entire heat exchanger plant can be brazed together in one brazing operation, which does not take longer time than to braze one plate heat exchanger.

In a plate heat exchanger provided with gaskets, i.e. a plate heat exchanger in which the heat transfer plates seal against each other by means of gaskets, it is possible by means of a so-called connection plate, which can be arranged in the middle of a package of heat transfer plates, to connect conduits to different parts of the plate heat exchanger. E.g. SE 144 978 shows a plate heat exchanger provided with gaskets comprising several connection plates 15, 16 of this kind. In a brazed plate heat exchanger for several heat exchange fluids it has so far not been possible to conduct a heat exchange fluid in the same way to or from a certain part of the plate heat exchanger. However, using brazed plate heat exchangers instead of plate heat exchangers provided with gaskets in a sub station has economical advantages. Thus, the manufacturing cost for brazed plate heat exchangers is about 40 % lower than for plate heat exchangers provided with gaskets of the same size. Further, the maintenance costs are lower since brazed plate heat exchangers do not have any gaskets, which need to be exchanged at even intervals.

In a heat exchanger plant according to the invention passages are formed between the intermediate plates in the two said plate heat exchangers on the one hand for district heating water and radiator water and on the other hand for district heating water and tap warm-water. The passages for at least one of the district heating water, the radiator water and the tap warm-water in one of the plate heat exchangers may advantageously be divided into several sets of passages connected in parallel, which sets are connected in series. By such a connection in series of sets of passages connected in parallel a particularly good heat transfer between the fluids may, at certain operating conditions, be achieved by means of the heat exchanger.

In an embodiment of the heat exchanger plant according to the invention the passages for district heating water in one of the said plate heat exchangers is divided into several sets of passages connected in parallel, which sets are connected in series. According to a specific embodiment of the invention such sets of parallel-connected passages for district heating water are connected in series in the said second plate heat exchanger, which is intended for heat exchange between district heating water and the said tap warm-water. Advantageously, also the passages for tap warm-water in the second plate heat exchanger may be divided into several sets of passages connected in parallel, which sets are connected in series.

In a heat exchanger plant according to a preferred embodiment of the invention the said second plate heat exchanger is provided with a connection device, which is adapted for connecting the heat exchanger plant to a warm water system of a building, intended for tap warm-water, for reheating cooled tap warm-water. The connection device communicates with at least one port channel intended for through-flow of tap warm-water.

In a particular embodiment of the invention a further channel forming member is arranged in the said space between the plate heat exchangers, forming a separate connection channel between a port channel for district heating water in the first plate heat exchanger and a port channel for district heating water in the second plate heat exchanger. Thus, in this embodiment district heating water can flow between the plate heat exchangers.

A heat exchanger plant according to the invention installed in a building is in operation all the year round. However, it may occur that the building in question need not be heated by means of radiator water during certain periods of the year. During such periods the said first plate heat exchanger for heat exchange between district heating water and radiator water is taken out of operation by closing off the supply of district heating water thereto. It is hereby presumed that the second plate heat exchanger has an inlet of its own and an outlet for district heating water

If a heat exchanger plant of this kind is provided with a further channel forming member of the kind mentioned above, intended for flow of district heating water between the two heat exchangers when both plate heat exchangers are in operation, it is suggested according to a further development of the invention that a barrier forming means is arranged in the separate connection channel, which extends through the further channel forming member. The barrier forming means shall be formed such that it considerably reduces flow of district heating water between the two heat exchangers when only one of them is in operation.

Thus, for minimizing the amount of district heating water, which flows from the said second plate heat exchanger into the first plate heat exchanger through the said separate connection channel and which causes undesired heat transfer to radiator water, when the first plate heat exchanger is out of operation, advisably the separate connection channel along part of its extension is at a level different, preferably a level higher, than that of the two port channels of respective plate heat exchanger, which communicate with each other by means of the separate connection channel.

If the separate connection channel has a through-flow area considerably larger than that of the port channels for district heating water in the respective plate heat exchangers, the barrier forming means suitably has such a size that the separate connection channel in the area of the barrier forming means gets a through-flow area of essentially the same size as that of the just mentioned port channels for district heating water in the respective plate heat exchangers. Preferably the barrier forming means is arranged in a lower part of the separate connection channel.

As an alternative to the separate connection channel being provided with a barrier forming means a connection channel, which has an essentially unchanged through-flow area, may instead extend through the said space between the plate heat exchangers such that at least part of the connection channel is at a level different than that of the two said port channels for district heating water. Suitably the separate connection channel extends through the space between the plate heat exchangers such that at least one part of its through-flow area is at a level higher than the two port channels for district heating water.

In a further preferred embodiment of the heat exchanger plant according to the invention the intermediate plates of the respective plate heat exchanger are provided with edge portions bent in the same direction and overlapping each other. In this connection the said spacing member between the plate heat exchangers is arranged such that it at least partly is surrounded by such a bent edge portion in the area closest to the respective plate heat exchanger. This makes possible an easy and reliable positioning of the spacing member in relation to the plates during brazing together of the heat exchanger plant. In this embodiment an end plate may be smaller than the respective intermediate plates and abut against such an intermediate plate inside its bent edge portion. Alternatively, the end plate may also be provided with a bent edge portion, which surrounds a part of the spacing member.

For a heat exchanger plant to be as compact as possible the spacing member should bridge a distance between the plate heat exchangers. which is less than three times the diameter of one of said port channels.

The spacing member may comprise a frame, which encloses the said space between the plate heat exchangers as well as a number of support ribs, which extend between different parts of the frame. Support ribs of this kind may be used as spacing members for obstructing bending of the end plates in respective plate heat exchanger during brazing together of the same. Advantageously, the support ribs are at least along part of their length brazed together with the end plates.

The invention is more closely described in the following by means of accompanying drawings. in which
fig. 1 shows a previously known brazed plate heat exchanger,
fig. 2 shows a section along the line II-II of the plate heat exchanger in fig. 1,
fig. 3-5 show three different views of a heat exchanger plant according to the invention,
fig. 6 shows a first embodiment of a spacing member forming part of a heat exchanger plant according to the invention, and
fig. 7 and 8 show two views of a second embodiment of such a spacing member.

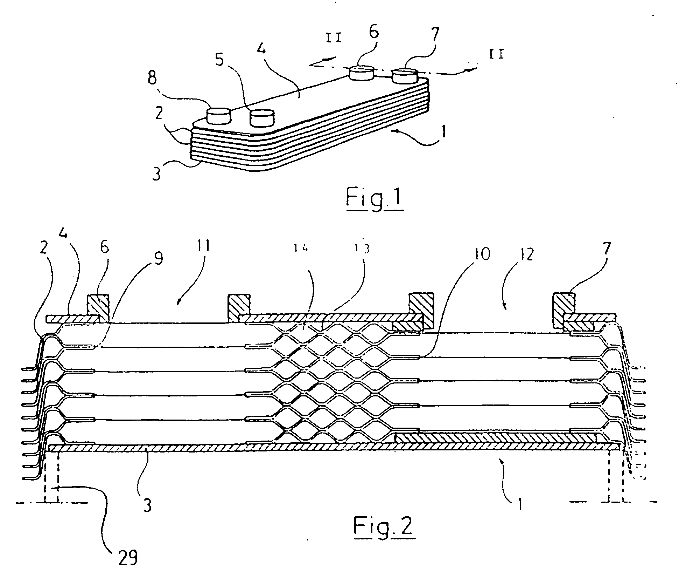

Fig. 1 shows a previously known brazed plate heat exchanger 1 comprising a stack of heat transfer plates 2 and end plates 3, 4 brazed together to a plate package. One of the end plates 4 is provided with four holes, around which respective pipe connections 5, 6, 7 and 8 are brazed.

Fig. 2 shows a section along line II-II of the plate heat exchanger 1 in fig. 1. Each heat transfer plate 2 is provided with four port holes, of which port holes 9 and 10 are shown in fig. 2. The heat transfer plates 2 abut in pairs against each other around the port holes such that four port channels are formed through the plate heat exchanger 1. Fig. 2 shows two port channels 11 and 12. The heat transfer plates 2 are further provided with a press pattern of depressions and elevations 13. In that way passages 14 for heat exchange fluids are formed between the heat transfer plates 2.

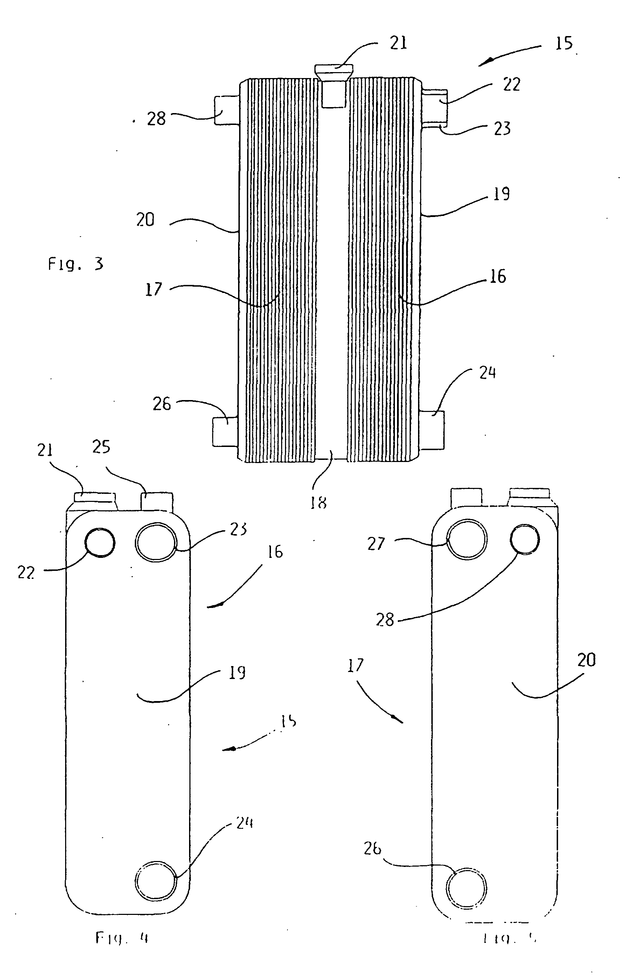

Fig. 3 shows a side view of a heat exchanger plant 15 according to an embodiment of the invention, which comprises two brazed plate heat exchangers 16, 17, which are brazed together through a spacing member in the form of a spacing plate 18. The plate heat exchangers 16, 17 differ from the plate heat exchanger 1 in fig. 1 and 2 by respective of the end plates 19, 20, which are turned away from each other, being provided with only three holes and three pipe connections and certain of the port channels through the plate heat exchangers 16, 17 being provided with flow obstructing means, which make the flow of the relevant heat exchange fluids pass several times through respective plate heat exchanger. In other words, instead of all passages for one heat exchange fluid in a plate heat exchanger being connected in parallel they are divided into groups or sets, within which the passages are connected in parallel, however the different sets being connected in series. Further. the two end plates, which are joined with the spacing plate 18 and which are not visible in fig. 3, are provided with one and three holes, respectively, located opposite to port channels through the respective plate heat exchangers 16, 17. The spacing plate 18 is on its one side provided with two pipe connections, the interior of which by means of the said holes in the end plates communicate with the respective port channels. One of the pipe connections is shown at 21 in fig. 3.

Fig. 4 shows the heat exchanger plant 15 from the side of the plate heat exchanger 16. The end plate 19 is provided with three pipe connections 22, 23, 24 and on the top of the heat exchanger plant 15 can be seen the pipe connection 21 of the spacing plate 18 and a further pipe connection 25, which is connected to the spacing plate.

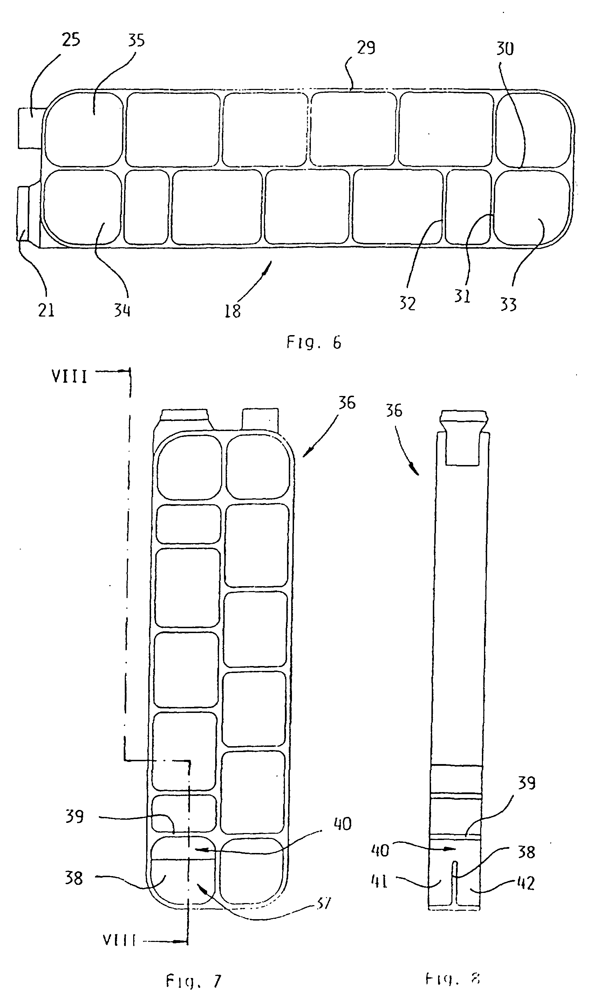

Fig. 5 shows the heat exchanger plant 15 from the side of the plate heat exchanger 17. The end plate 20 is provided with three pipe connections 26, 27, 28.

Fig. 6 shows a spacing plate 18. It is constituted by a rectangular frame 29 and between different parts of the frame 29 extending support ribs 30, 31, 32. The spacing plate 18 is, as mentioned, brazed together with both plate heat exchangers 16, 17. Broken lines in fig. 2 illustrate how the frame 29 of the spacing plate is arranged in relation to each of the plate heat exchangers. As can be seen, a part of the frame 29 or spacing plate 18 is surrounded by a bent edge portion of one or more of the plates in the plate heat exchanger. The support ribs 30-32 constitute support for the end plates and heat transfer plates in the plate heat exchangers during brazing together of the heat exchanger plant 15. Advantageously, also the support ribs 30-32 are brazed together with respective end plates of the plate heat exchangers. These end plates may be plane or provided with a press pattern of elevations and depressions. In the latter case the support ribs may be brazed together with only the elevations of the end plates.

Between the support ribs 30-32 and the frame 29 several spaces are delimited. In the heat exchanger plant 15 some of these spaces may form connection channels, through which heat exchange fluids can be conducted. The pipe connections 21. 25 at one side of the spacing plate 18 communicate each with such a space 34, 35, respectively, such that heat exchange fluids may flow to or from the port channels through the plate heat exchangers 16, 17 through respective pipe connection 21, 25, spaces 34, 35 and holes in the end plates. For example the space 33 may constitute a connection channel between port channels through respective plate heat exchanger 16, 17.

When a heat exchanger plant 15 according to fig. 3-6 forms part of a sub station and is in operation three heat exchange fluids flow through the heat exchanger plant, namely district heating water, radiator water and tap warm-water, sometimes called domestic hot water. The radiator water is heated by the district heating water in the plate heat exchanger 16, the radiator water flowing into the plate heat exchanger 16 through the pipe connection 24 and out through the pipe connection 23. The district heating water flows into the plate heat exchanger 16 through the pipe connection 22 and out of the plate heat exchanger 16 through an opening in its end plate at the spacing plate 18 and further through a connection channel formed by the space 33 in the spacing plate and into the plate heat exchanger 17 through an opening in its end plate at the spacing plate 18.

In the plate heat exchanger 17 tap warm-water is heated by the district heating water. The passages for the tap warm-water and the district heating water, respectively, in the plate heat exchanger 17 are each divided into two sets such that the passages within respective set are connected in parallel, whereas the sets are connected in series. The district heating water flows into the plate heat exchanger 17 through the pipe connection 28 and further through its first set of passages. Thereafter it is mixed with the district heating water, which is received in the plate heat exchanger 17 from the plate heat exchanger 16, before it flows through its second set of passages and out through an opening in the end plate, which is at the spacing plate 18. From here it flows through a connection channel formed by the space 34 in the spacing plate 18 and further through the pipe connection 21 out of the heat exchanger plant 15. Cold tap warm-water flows into the heat exchanger plant 15 through the pipe connection 25 in the spacing plate 18 and through a connection channel formed by the space 35, further through an opening in the end plate of the plate heat exchanger 17 to its first and second sets of passages and thereafter out of the plate heat exchanger 17 through the pipe connection 27. The heated tap warm-water may thereafter be circulated in a warm water system in a building and if the temperature of the tap warm-water would become too low, the tap warm-water may be reheated in the plate heat exchanger 17 by flowing into the same through the pipe connection 26 and through its second set of passages, thereafter again flowing out of the plate heat exchanger 17 through the pipe connection 27.

In an alternative embodiment of the heat exchanger plant according to the invention the spacing plate 18 is provided with round pipes, which form spaces corresponding to the spaces 33, 34, 35 and the end surfaces of which abut against plane surfaces around the openings of the end plates In this embodiment the support ribs do not needed to seal against the end plates.

A heat exchanger plant according to the invention, which is installed in a building and connected to a tap warm-water circuit and a radiator water circuit, usually is used only periodically for heating radiator water. In many countries namely, the plate heat exchanger for heating radiator water may be taken out of operation during certain parts of the year. When this plate heat exchanger is taken out of operation the supply of district heating water thereto is closed off, the passages for district heating water in the plate heat exchanger remaining filled with cold district heating water. In the radiator water circuit of the building the radiator water circulates, either through self circulation or by means of a circulation pump pumping radiator water through the radiator water circuit, despite the feed of district heating water being closed off.

In the heat exchanger plant 15 a port channel for district heating water in the plate heat exchanger 16 is connected with a port channel for district heating water in the plate heat exchanger 17 through the space 33 in the spacing plate 18. When the feed of the district heating water through the plate heat exchanger 16 is closed off a part of the warm district heating water in the plate heat exchanger 17 may flow into the plate heat exchanger 16 through the space 33 and there give an undesired heat transfer to the radiator water. This undesired heat transfer constitutes an energy loss and therefore a heat exchanger plant for such operation should suitably comprise a spacing plate 36 according to fig. 7 and 8.

The spacing plate 36 differs from the spacing plate 18 in fig. 6 by a space 37, corresponding to the space 33, between the support ribs of the spacing plate 36 having been provided with a barrier forming means in the form of an intermediate wall 38. The intermediate wall 38 covers the lower part of the passage, which is formed between the plate heat exchangers 16 and 17 by the space 37. Between the upper part of the intermediate wall 38 and the support rib 39 in the spacing plate 36 thus, a flow passage 40 is formed, which has a through-flow area having essentially the same size as the through-flow area in one of the port channels for district heating water in one of the plate heat exchangers 16. 17. The intermediate wall 38 reduces the undesired heat transfer between the plate heat exchangers 16 and 17 to a negligible level, when the plate heat exchanger 17 is not in operation.

The intermediate wall 38 divides the space 37 into mainly two parts or sections 41, 42. The first section 41 to the left of the intermediate wall 38 in fig. 8, communicates with a port channel for district heating water in the plate heat exchanger 17 for heating tap warm-water. The second section 42 to the right of the intermediate wall 38 in fig. 8 communicates with a port channel for district heating water in the plate heat exchanger 16 for heating radiator water.

When a heat exchanger plant comprising a spacing plate 36 is used only for heating tap warm-water, i.e. when no district heating water flows through the plate heat exchanger 17 the dividing of the space 37 into two sections mainly fills two functions, which reduce the undesired heat transfer:
- A part of the warm district heating water, which flows through the plate heat exchanger 17 will flow into the space 37. However, it will primarily remain in the section 41 wherein it circulates before it flows back into the plate heat exchanger 17.
- The plate heat exchanger 16 contains cold district heating water, which also occupies the section 42. Since the district heating water in the plate heat exchanger 16 stands still it will form one or more temperature layers in the section 42. This temperature layering prevents considerable flow of warm district heating water from the section 41 into the section 42 and further into the plate heat exchanger 16.

Thus, only a small part of the warm district heating water in the section 41 will mix with the cold district heating water in the section 42 and there through accomplish an undesired heat transfer to the plate heat exchanger 17.

Several different embodiments of the barrier forming means are possible, e.g. the intermediate wall 38 does not need to be arranged in the middle of the space 37, instead it may be arranged displaced laterally, alternatively, the intermediate wall may be divided into two parts such that a flow passage for district heating water is formed between the respective parts. The through-flow area of the flow passage 40 may be bigger than, alternatively smaller than the cross-section area of one of the port channels for district heating water.

Instead of a barrier forming means arranged in a space delimited by the spacing plate, a connection channel between the two port channels for district heating water may be formed in another way such that undesired heat transfer between the two plate heat exchangers is minimized. Thus. the connection channel may have essentially the same through-flow area as the port channels for district heating water in the respective plate heat exchangers and along part of its extension be at a level different, preferably higher, than that of the two port channels. Suitably essentially the entire through-flow area along part of the extension of the connection channel is at a level different than that of the two port channels. E.g. the connection channel may be shaped as a U, alternatively as a U turned upside down, temperature layers forming in the leg of the U. which contains mainly cold district heating water, and a circulation of warm district heating water will take place in the other leg.

According to the invention the end plates of the plate heat exchangers facing each other may be completely plane and not be adapted to delimit passages for any of the district heating water, the radiator water and the tap warm-water in their respective plate packages. However, they may alternatively be adapted to delimit such passages and in this case they are preferably of the same kind as the intermediate plates, i.e. the real heat transfer plates, maybe with exception of the number of port holes.

The connection devices of the heat exchanger plant need not be formed as pipe connections but may instead be constituted by blocks provided with through holes. At the blocks conduits may be fastened opposite to the through holes. Another possibility is that the heat exchanger plant has no connection devices and that conduits in this case are pressed directly against the end plates 19, 20 and the spacing plate 18, respectively, around holes formed therein.

The number of connections at the spacing plate and the number of openings in the end plates at the spacing plate may of course be adapted to how the district heating water, the radiator water and the tap warm-water is intended to flow through the heat exchanger plant.

## Claims

1. A heat exchanger plant comprising a first brazed plate heat exchanger (16) adapted for heat exchange between district heating water and radiator water and a second brazed plate heat exchanger (17) adapted for heat exchange between district heating water and tap warm-water, each of which plate heat exchangers (16, 17) has a plate package, which comprises two end plates and several intermediate plates therebetween and through which there extend several port channels formed by aligned port holes in said plates, the plate heat exchangers (16, 17) being arranged such that two end plates are situated at a distance from and opposite to each other and at least one channel forming member (21, 25) is arranged between these end plates for conducting one of the district heating water, the radiator water and the tap warm-water through a connection channel to or from one or more of said port channels,
**characterized in**
- **that** the plate heat exchangers (16, 17) form a single brazed unit together with a spacing member (18; 36) which is positioned between and extends along the edges of the end plates located opposite to each other and which encloses a space between the plate heat exchangers (16, 17),
- **that** a plurality of connecting spaces (33, 34, 35) are enclosed by the spacing member (18; 36) between the plate heat exchangers (16, 17) and are in communication with port channels of the heat exchangers, the connecting spaces (33, 34, 35) being closed at the opposed end plates by the brazed connection of the spacing member to said end plates; and
- **that** said channel forming member (21, 25) has a form such that a connection channel formed therein extends from one of the connecting spaces (33, 34, 35) through the spacing member (18; 36) to the outside thereof, such that the connection channel is accessible outside said space between the plate heat exchangers (16, 17) for supply or removal of one of said district heating water, radiator water and tap warm-water.

2. A heat exchanger plant according to claim 1, wherein pipe connections (22-24, 26-28) for flow of water into and out of the heat exchangers are provided at the end plates (19, 20) remote from the spacing member (18; 36).

3. A heat exchanger plant according to claim 1 or 2, wherein in said plate heat exchangers (16, 17) passages are formed between said intermediate plates on the one hand for the district heating water and the radiator water and on the other hand for the district heating water and the tap warm-water, the passages for at least one of the district heating water, the radiator water and the tap warm-water in one of the plate heat exchangers (16, 17) being divided into several sets of passages connected in parallel, which sets are connected in series.

4. A heat exchanger plant according to claim 3, wherein the passages for the district heating water in one of the said plate heat exchangers (16, 17) is divided into several sets of passages connected in parallel, which sets are connected in series.

5. A heat exchanger plant according to claim 4, wherein said sets of parallel-connected passages for the district heating water are connected in series in said second plate heat exchanger (17) for heat exchange between the district heating water and said tap warm-water.

6. A heat exchanger plant according to any one of the claims 3-5, wherein the passages for the tap warm-water in said second plate heat exchanger (17) are divided into several sets of passages connected in parallel, which sets are connected in series.

7. A heat exchanger plant according to any one the preceding claims, wherein said second plate heat exchanger (17) is provided with a connection device (26), which is adapted for connecting the heat exchanger plant to a warm water system of a building, intended for tap warm-water, for reheating cooled tap warm-water and which connection device (26) communicates with at least one of said port channels intended for through-flow of tap warm-water.

8. A heat exchanger plant according to any one of the preceding claims, wherein a further channel forming member (30; 39) is arranged in said space between the plate heat exchangers (16, 17) and forms a separate connection channel (33, 37), which connects a port channel for district heating water in the first plate heat exchanger (16) with a port channel for district heating water in the second plate heat exchanger (17).

9. A heat exchanger plant according to claim 8, wherein in said separate connection channel a barrier forming means (38) is arranged, adapted to reduce undesired flow of district heating water between said first and second plate heat exchangers (16, 17), when heat transfer is to take place only in one of the plate heat exchangers (16, 17).

10. A heat exchanger plant according to claim 9, wherein the separate connection channel (37) has a smaller through-flow area in the area (40) of the barrier forming means (38) than in the remaining part of the same.

11. A heat exchanger plant according to claim 10, wherein the separate connection channel (37) in the area (40) of the barrier forming means (38) has essentially the same through-flow area as the port channels, between which it extends.

12. A heat exchanger plant according to any one of the claims 9-11, wherein said barrier forming means (38) is arranged in a lower part of said separate connection channel (37).

13. A heat exchanger plant according to claim 8, wherein said separate connection channel in the space between the plate heat exchangers has an essentially unchanged through-flow area and along part of its extension is at a level different than that of the two port channels, between which it extends.

14. A heat exchanger plant according to claim 13, wherein the separate connection channel along said part of its extension is at a level higher than the two said port channels.

15. A heat exchanger plant according to any one of the preceding claims, wherein said intermediate plates of the respective plate heat exchangers (16, 17) are provided with edge portions bent in the same direction and overlapping each other, said spacing member (18; 36) between the plate heat exchangers being arranged such that it at least partly is surrounded by one such bent edge portion.

16. A heat exchanger plant according to claim 15, wherein also said end plates of the plate heat exchangers (16, 17) are provided with bent edge portions, wherein the said spacing member (18; 36) at least partly is surrounded by a bent portion of an end plate.

17. A heat exchanger plant according to any one of the preceding claims, wherein said spacing member (18; 36) bridges a distance between the plate heat exchangers (16, 17), which is less than three times the diameter of one of said port channels.

18. A heat exchanger plant according to any one of the preceding claims, wherein said spacing member (18; 36) has a frame (29), which encloses said space between the plate heat exchangers (16, 17), and a number of support ribs (30, 31, 32), which inside the spacing member extend between different parts of said frame (29).

19. A heat exchanger plant according to claim 18, wherein at least one of said support ribs (30, 31, 32) at least along part of its length is brazed together with one of said end plates.

## Patentansprüche

1. Wärmetauschanlage, umfassend einen ersten gelöteten Plattenwärmetauscher (16), der zum Wärmetausch zwischen öffentlichem Heizwasser und Heizungswasser dient, und einen zweiten gelöteten Plattenwärmetauscher (17), der zum Wärmetausch zwischen öffentlichem Heizwasser und warmem Leitungswasser dient, wobei jeder der Plattenwärmetauscher (16, 17) einen Plattenstapel aufweist, der zwei Endplatten und mehrere dazwischen befindliche Zwischenplatten umfaßt, durch die sich mehrere Durchgangskanäle erstrecken, die von ausgerichteten Durchgangslöchern in den Platten gebildet werden, wobei die Plattenwärmetauscher (16, 17) so angeordnet sind, daß zwei Endplatten beabstandet einander gegenüber angeordnet sind und mindestens ein kanalbildendes Element (21, 25) zwischen diesen Endplatten angeordnet ist, das zum Leiten entweder des öffentlichen Heizwassers, des Heizungswassers oder des warmen Leitungswassers durch einen Verbindungskanal zu einem oder mehreren der Durchgangskanäle hin oder davon weg dient,
**dadurch gekennzeichnet, daß**
- die Plattenwärmetauscher (16, 17) eine einzige gelötete Einheit zusammen mit einem Abstandselement (18; 36) bilden, das sich zwischen den einander gegenüberliegenden Kanten der Endplatten befindet und entlang dieser erstreckt und das einen Raum zwischen den Plattenwärmetauschern (16, 17) einschließt,
- vom Abstandselement (18; 36) zwischen den Plattenwärmetauschern (16, 17) eine Mehrzahl von Verbindungsräumen (33, 34, 35) eingeschlossen wird, die in Verbindung mit den Durchgangskanälen der Wärmetauscher stehen, wobei die Verbindungsräume (33, 34, 35) an den gegenüberliegenden Endplatten durch die gelötete Verbindung des Abstandselementes mit den Endplatten geschlossen werden; und
- das kanalbildende Element (21, 25) eine solche Form hat, daß sich ein darin gebildeter Durchgangskanal von einem der Verbindungsräume (33, 34, 35) durch das Abstandselement (18; 36) zu dessen Außenseite erstreckt, so daß der Verbindungskanal außerhalb des Raumes zwischen den Plattenwärmetauschern (16, 17) für die Zu- oder Abfuhr des öffentlichen Heizwassers, des Heizungswassers oder des warmen Leitungswasser zugänglich ist.

2. Wärmetauschanlage nach Anspruch 1, wobei die Rohrverbindungen (22-24, 26-28) für die Strömung des Wassers in die Wärmetauscher hinein und aus ihnen heraus an den Endplatten (19, 20) vorgesehen sind, die vom Abstandselement (18; 36) entfernt liegen.

3. Wärmetauschanlage nach Anspruch 1 oder 2, wobei in den Plattenwärmetauschern (16, 17) Durchgänge zwischen den Zwischenplatten einerseits für das öffentliche Heizwasser und das Heizungswasser und andererseits für das öffentliche Heizwasser und das warme Leitungswasser gebildet sind, wobei die Durchgänge mindestens für das öffentliche Heizwasser, das Heizungswasser oder das warme Leitungswasser in einem der Plattenwärmetauscher (16, 17) in mehrere Sätze von Durchgängen unterteilt sind, die parallel verbunden sind, wobei die Sätze in Reihe verbunden sind.

4. Wärmetauschanlage nach Anspruch 3, wobei die Durchgänge für das öffentliche Heizwasser in einem der Plattenwärmetauscher (16, 17) in mehrere Sätze von Durchgängen unterteilt sind, die parallel verbunden sind, wobei die Sätze in Reihe verbunden sind.

5. Wärmetauschanlage nach Anspruch 4, wobei die Sätze von parallel verbundenen Durchgängen für das öffentliche Heizwasser im zweiten Plattenwärmetauscher (17) zum Wärmetausch zwischen dem öffentlichen Heizwasser und dem warmen Leitungswasser in Reihe verbunden sind,.

6. Wärmetauschanlage nach einem der Ansprüche 3-5, wobei die Durchgänge für das warme Leitungswasser im zweiten Plattenwärmetauscher (17) in mehrere Sätze von Durchgängen unterteilt sind, die parallel verbunden sind, wobei die Sätze in Reihe verbunden sind.

7. Wärmetauschanlage nach einem der vorangegangenen Ansprüche, wobei der zweite Plattenwärmetauscher (17) mit einer Verbindungsvorrichtung (26) ausgestattet ist, die zum Verwenden der Wärmetauschanlage mit einem Warmwassersystem eines Gebäudes, das für warmes Leitungswasser vorgesehen ist, dient, um abgekühltes warmes Leitungswasser wieder zu erhitzen, wobei die Verbindungsvorrichtung (26) mit mindestens einem der Durchgangskanäle verbunden ist, die zum Durchfluß von warmem Leitungswasser dienen.

8. Wärmetauschanlage nach einem der vorangegangenen Ansprüche, wobei ein weiteres kanalbildendes Element (30; 39) im Raum zwischen den Plattenwärmetauschern (16, 17) angeordnet ist und einen getrennten Verbindungskanal (33, 37) bildet, der einen Durchgangskanal für öffentliches Heizwasser im ersten Plattenwärmetauscher (16) mit einem Durchgangskanal für öffentliches Heizwasser im zweiten Plattenwärmetauscher (17) verbindet.

9. Wärmetauschanlage nach Anspruch 8, wobei in dem getrennten Verbindungskanal eine barrierebildende Einrichtung (38) angeordnet ist, die zum Verringern einer unerwünschten Strömung von öffentlichem Heizwasser zwischen dem ersten und zweiten Plattenwärmetauscher (16, 17) dient, wenn der Wärmetausch nur in einem der Wärmeplattentauscher (16, 17) stattfinden soll.

10. Wärmetauschanlage nach Anspruch 9, wobei der getrennte Verbindungskanal (37) im Bereich (40) der barrierebildenden Einrichtung (38) einen kleineren Durchströmungsbereich hat als der verbleibende Teil desselben.

11. Wärmetauschanlage nach Anspruch 10, wobei der getrennte Verbindungskanal (37) im Bereich (40) der barrierebildenden Einrichtung (38) im wesentlichen den gleichen Durchströmungsbereich aufweist wie die Durchgangskanäle, zwischen denen er sich erstreckt.

12. Wärmetauschanlage nach einem der Ansprüche 9-11, wobei die barrierebildende Einrichtung (38) im unteren Teil des getrennten Verbindungskanals (37) angeordnet ist.

13. Wärmetauschanlage nach Anspruch 8, wobei der getrennte Verbindungskanal im Raum zwischen den Plattenwärmetauschern einen im wesentlichen ungeänderten Durchströmungsbereich aufweist und sich entlang eines Teiles seiner Ausdehnung in einer anderen Höhe befindet als die beiden Durchgangskanäle, zwischen denen er sich erstreckt.

14. Wärmetauschanlage nach Anspruch 13, wobei der getrennte Verbindungskanal entlang eines Teiles seiner Ausdehnung höher liegt als die beiden Durchgangskanäle.

15. Wärmetauschanlage nach einem der vorangegangenen Ansprüche, wobei die Zwischenplatten der jeweiligen Plattenwärmetauscher (16, 17) mit Kantenabschnitten versehen sind, die in derselben Richtung angehoben sind und einander überlappen, wobei das Abstandselement (18; 36) zwischen den Plattenwärmetauschern so angeordnet ist, daß es zumindest teilweise von einem der gebogenen Kantenabschnitte umgeben wird.

16. Wärmetauschanlage nach Anspruch 15, wobei auch die Endplatten der Plattenwärmetauscher (16, 17) mit gebogenen Kantenabschnitten versehen sind, wobei das Abstandselement (18; 36) wenigstens teilweise von einem gebogenen Abschnitt einer Endplatte umgeben wird.

17. Wärmetauschanlage nach einem der vorangegangenen Ansprüche, wobei das Abstandselement (18; 36) einen Abstand zwischen den Plattenwärmetauschern (16, 17) überbrückt, der kleiner ist als das Dreifache des Durchmessers eines der Durchgangskanäle.

18. Wärmetauschanlage nach einem der vorangegangenen Ansprüche, wobei das Abstandselement (18; 36) einen Rahmen (29) aufweist, der den Raum zwischen den Plattenwärmetauschern (16,17) einschließt, und eine Anzahl von Tragerippen (30, 31, 32), die sich im Abstandselement zwischen verschiedenen Teilen des Rahmens (29) erstrecken.

19. Wärmetauschanlage nach Anspruch 18, wobei mindestens eine der Tragerippen (30, 31, 32) wenigstens entlang eines Teiles ihrer Länge mit einer der Endplatten zusammengelötet ist.

## Revendications

1. Appareil échangeur de chaleur comprenant un premier échangeur de chaleur à plaques brasées (16) apte à l'échange thermique entre l'eau de chauffage du réseau régional et l'eau du radiateur et un second échangeur de chaleur à plaques brasées (17) apte à l'échange thermique entre l'eau de chauffage du réseau régional et l'eau chaude du robinet, chacun des échangeurs de chaleur à plaques (16, 17) comportant un ensemble de plaques, qui comprend deux plaques d'extrémité et plusieurs plaques intermédiaires et à travers lesquelles s'étendent plusieurs canaux à orifices formés par des pérçages d'orifices alignés dans lesdites plaques, les échangeurs de chaleur à plaques (16, 17) étant agencés de telle sorte que deux plaques d'extrémité soient situées à distance et en regard l'une de l'autre et qu'au moins un élément formant canal (21, 25) soit agencé entre ces plaques d'extrémité pour acheminer l'eau de chauffage du réseau régional, l'eau du radiateur ou l'eau chaude du robinet par un canal de liaison à destination et en provenance d'un ou de plusieurs desdits canaux à orifice,
**caractérisé en ce que**
- les échangeurs de chaleur à plaques (16, 17) forment une seule unité brasée conjointement avec un élément d'espacement (18 ; 36) qui est intercalé entre et s'étend le long des bords des plaques d'extrémité situées en regard l'une de l'autre et qui renferme un espace entre les échangeurs de chaleur à plaques (16, 17),
- une pluralité d'espaces de liaison (33, 34, 35) sont renfermés par l'élément d'espacement (18 ; 36) entre les échangeurs de chaleur à plaques (16, 17) et sont en communication avec des canaux à orifices des échangeurs de chaleur, les espaces de liaison (33, 34, 35) étant fermés au niveau des plaques d'extrémité opposées par la liaison brasée de l'élément d'espacement sur lesdites plaques d'extrémité ; et
- ledit élément formant canal (21, 25) présente une forme telle qu'un canal de liaison formé dans celui-ci s'étend depuis l'un des espaces de liaison (33, 34, 35), à travers l'élément d'espacement (18 ; 36), vers l'extérieur de celui-ci, de telle sorte que le canal de liaison est accessible à l'extérieur dudit espace entre lesdits échangeurs de chaleur à plaques (16, 17) pour l'alimentation ou l'évacuation de l'eau de chauffage du réseau régional, de l'eau du radiateur ou de l'eau chaude du robinet.

2. Appareil échangeur de chaleur selon la revendication 1, dans lequel les raccords de conduites (22-24, 26-28) pour l'écoulement de l'eau en arrivée et en sortie des échangeurs de chaleur sont disposés sur les plaques d'extrémité (19, 20) à distance de l'élément d'espacement (18 ; 36).

3. Appareil échangeur de chaleur selon la revendication 1 ou 2, dans lequel dans lesdits échangeurs de chaleur à plaques (16, 17) des passages sont formés entre lesdites plaques intermédiaires, d'une part, pour l'eau de chauffage du réseau régional et l'eau du radiateur et, d'autre part, pour l'eau de chauffage de réseau régional et l'eau chaude du robinet, les passages pour au moins soit l'eau de chauffage de réseau régional, soit l'eau du radiateur et l'eau chaude du robinet dans l'un des échangeurs de chaleur à plaques (16, 17) étant divisés en plusieurs ensembles de passages reliés en parallèle, lesquels ensembles sont reliés en série.

4. Appareil échangeur de chaleur selon la revendication 3, dans lequel les passages pour l'eau de chauffage du réseau régional dans l'un desdits échangeurs de chaleur à plaques (16, 17) sont divisés en plusieurs ensembles de passages reliés en parallèle, lesquels ensembles sont reliés en série.

5. Appareil échangeur de chaleur selon la revendication 4, dans lequel lesdits ensembles de passages reliés en parallèle pour l'eau de chauffage de réseau régional sont reliés en série dans ledit second échangeur de chaleur à plaques (17) pour l'échange thermique entre l'eau de chauffage de réseau régional et ladite eau chaude du robinet.

6. Appareil échangeur de chaleur selon l'une quelconque des revendications 3-5, dans lequel les passages pour l'eau chaude du robinet dans ledit second échangeur de chaleur à plaques (17) sont divisés en plusieurs ensembles de passages reliés en parallèle, lesquels passages sont reliés en série.

7. Appareil échangeur de chaleur selon l'une quelconque des revendications précédentes, dans lequel ledit second échangeur de chaleur à plaques (17) est muni d'un dispositif de liaison (26) qui est apte à relier l'appareil échangeur de chaleur à un système d'eau chaude d'un bâtiment, destiné à l'eau chaude de robinet, pour réchauffer l'eau chaude du robinet refroidie, et lequel dispositif de liaison (26) communique avec au moins l'un desdits canaux d'orifice destinés à l'écoulement direct de l'eau chaude du robinet.

8. Appareil échangeur de chaleur selon l'une quelconque des revendications précédentes, dans lequel un autre élément formant canal (30 ; 39) est agencé dans ledit espace entre les échangeurs de chaleur à plaques (16, 17) et forme un canal de liaison séparé (33, 37) qui relie un canal à orifice pour l'eau de chauffage du réseau régional dans le premier échangeur de chaleur à plaques (16) avec un canal à orifice pour l'eau de chauffage du réseau régional dans le second échangeur de chaleur à plaques (17).

9. Appareil échangeur de chaleur selon la revendication 8, dans lequel, dans ledit canal de liaison séparé, sont agencés des moyens formant barrière (38), aptes à réduire le flux indésirable d'eau de chauffage du réseau régional entre lesdits premier et second échangeurs de chaleur à plaques (16, 17) lorsque le transfert thermique ne doit s'effectuer que dans l'un des échangeurs de chaleur à plaques (16, 17).

10. Appareil échangeur de chaleur selon la revendication 9, dans lequel le canal de liaison séparé (37) présente une zone d'écoulement plus petite dans la zone (40) des moyens formant barrière (38) que dans la partie restante de ceux-ci.

11. Appareil échangeur de chaleur selon la revendication 10, dans lequel le canal de liaison séparé (37) dans la zone (40) des moyens formant barrière (38) présente sensiblement la même zone d'écoulement que les canaux à orifices entre lesquels ils s'étendent.

12. Appareil échangeur de chaleur selon l'une quelconque des revendications 9-11, dans lequel lesdits moyens formant barrière (38) sont agencés dans une partie inférieure dudit canal de liaison séparé (37).

13. Appareil échangeur de chaleur selon la revendication 8, dans lequel ledit canal de liaison séparé dans l'espace entre les échangeurs de chaleur à plaques présente une zone d'écoulement sensiblement inchangée et, le long d'une partie de son prolongement, se situe à un niveau différent de celui des deux canaux à orifices entre lesquels il s'étend.

14. Appareil échangeur de chaleur selon la revendication 13, dans lequel le canal de liaison séparé le long de ladite partie de son prolongement se situe à un niveau supérieur auxdits deux canaux à orifices.

15. Appareil échangeur de chaleur selon l'une quelconque des revendications précédentes, dans lequel lesdites plaques intermédiaires des échangeurs de chaleur à plaques respectifs (16, 17) sont munies de portions de bord pliées dans la même direction et se chevauchant, ledit élément d'espacement (18 ; 36) entre les échangeurs de chaleur à plaques étant disposé de façon à être au moins partiellement entouré d'une portion de bord pliée de ce type.

16. Appareil échangeur de chaleur selon la revendication 15, dans lequel lesdites plaques d'extrémité des échangeurs de chaleur à plaques (16, 17) sont également munies de portions de bord pliées, ledit élément d'espacement (18 ; 36) étant au moins partiellement entouré d'une portion pliée d'une plaque d'extrémité.

17. Appareil échangeur de chaleur selon l'une quelconque des revendications précédentes, dans lequel ledit élément d'espacement (18 ; 36) enjambe une distance entre les échangeurs de chaleur à plaques (16, 17) qui est égale à moins de trois fois le diamètre de l'un desdits canaux à orifices.

18. Appareil échangeur de chaleur selon l'une quelconque des revendications précédentes, dans lequel ledit élément d'espacement (18 ; 36) présente un cadre (29) qui renferme ledit espacement entre les échangeurs de chaleur à plaques (16, 17) et un certain nombre de nervures de support (30, 31, 32) qui, à l'intérieur de l'élément d'espacement, s'étendent entre différentes parties dudit cadre (29).

19. Appareil échangeur de chaleur selon la revendication 18, dans lequel au moins l'une desdits nervures de support (30, 31, 32), au moins le long d'une partie de sa longueur, est brasée conjointement avec l'une desdites plaques d'extrémité.
